# EUROPEAN PATENT APPLICATION

(11) **EP 2 999 203 A1**
(43) Date of publication of application: **23.03.2016**
(21) Application number: 14306455.8
(22) Date of filing: 22.09.2014
(51) Int. Cl.: H04M 3/56

(54) **Conferencing system**

(71) Applicant: ALCATEL LUCENT, 92100 Boulogne-Billancourt (FR)
(72) Inventor: Gerner, Philippe, 67400 Illkirch (FR); Leckler, Philippe, 67400 Illkirch (FR)
(74) Representative: Sciaux, Edmond

(57) **Abstract**

An audio conference system (1) comprising:
- a bridge device (10) for connecting together as input a plurality of audio sources and for outputting a plurality of identical combined audio streams;
- a storage device (20) adapted for storing keywords,
- a voice recognition device (15) adapted to compare the audio sources connected to said bridge device with said keywords stored on the storage device;
wherein said voice recognition device (15) is adapted to modulate the volume of said audio streams in function of voice recognition detecting a match between a keyword and audio in any one of said audio sources.

## Description

### TECHNICAL FIELD

The present invention relates to a conferencing system.

### BACKGROUND OF INVENTION

This section introduces aspects that may be helpful in facilitating a better understanding of the invention. Accordingly, the statements of this section are to be read in this light and are not to be understood as admissions about what is in the prior art or what is not in the prior art.

When participating in audio conferences, some conversation subjects discussed may not be relevant to all participants, causing them to lose focus or multitask with other work. This is especially so in passive audio conferences where participants are not called to actively contribute to the discussion. Other participants may simply forego the audio conference altogether as not judged interesting enough to dedicate their whole attention to it.

A solution is sought to improve the audio conferencing experience.

### SUMMARY

In view of the foregoing, an embodiment herein provides a system as claimed in claim 1.

This approach provides an aid to a person participating to a conference, for example by managing the attention requirements of the person. The approach helps to preserve the person's attention by filtering out uninteresting or irrelevant parts as determined by the person.

Indeed, in an embodiment, this would allow for the conference to be muted or at a low volume by default, and automatically returned to a normal volume when the discussion returns to subjects that interest the listener.

Another embodiment herein provides for a method as claimed in claim 10.

### BRIEF DESCRIPTION OF THE FIGURES

These and other aspects of the embodiments herein will be better appreciated and understood when considered in conjunction with the following description and the accompanying drawings, in which:
- Figure 1 illustrates an audio conferencing system according to an embodiment of the present invention;
- Figure 2 illustrates a use case for the system of figure 1, according to an embodiment.

It is to be noted that the figures are not drawn to scale, and are purely illustrative.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

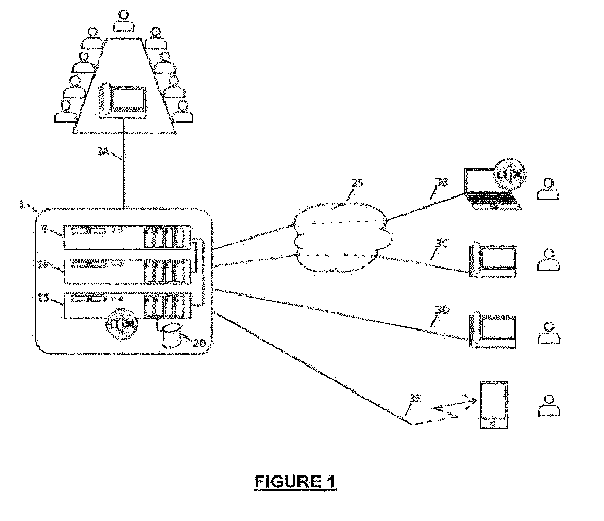

Fig 1 illustrates an audio conferencing system 1 according to a first embodiment.

The audio conference system 1 comprises for example:
- a switch device 5;
- a conference bridge device 10;
- a filtering server 15.

The switch device 5 is adapted to route incoming and outgoing calls, and generally manage a plurality of communication lines, for example by connecting telephone or audio communication lines together to establish a communication link between users of the system.

The conference bridge device 10 is adapted to join three or more communication lines together to provide a single audio line connecting three or more users. The communication lines are not restrictive, and could be traditional copper telephone lines, PABX, VoIP, or internet-only communication channels.

The filtering device 15 comprises a voice recognition module adapted to match words spoken through the bridge device 10 with a set of key words. More particularly, the filtering device 15 comprises a keyword storage 20 for storing said set of keywords. The filtering device 15 is further adapted to bring to the attention of one or more users of the conference bridge 10 the event that a word was matched in the audio exchange over the bridge device 10.

The keyword storage 20 stores keywords and key-phrases. The system will work to recognize them in the conversation. An example of an embodiment, is storing the keywords in alphabetic form, and using a real-time speech-to-text system, and recognizing the keywords in the transcribed text (using standard record-linkage techniques for handling the multiple forms of a word). This approach allows for using a dictionary of synonyms to implement an intelligent match. An alternative (or complementary) embodiment would use audio "fingerprint" of keywords, for matching "directly" with the audio content.

When the user uses the application, he can use the keywords of preceding uses, and/or enter new keywords, before or at any time during the conference. The list of keywords could be edited at any time. Usual interface facilities such as automatic completion/correction are of course envisioned, but they are not described as these alternatives are well known to the skilled person. Another facility is for the user to dictate the keywords to the application, which are then stored in text-transcript form, or in audio form.

The filtering device 15 may be activated globally for all conversations transitioning via the system 1, or may be selectively activated by specific user(s) on his/their own communication lines. Activation may for example be via the keypad of the telephone, via an access portal associated with the client or user account via the internet 25 or the internal network.

In operation, the conference system 1 may be connected to a plurality of communication lines referenced generally under the numeral 3.

For instance, communication lines 3 may be understood to be one or more of the following:
- A telephone or IP line 3A to a meeting room public conference system;
- An IP communication line 3B via the internet 25 on a computer
- An IP communication line 3C via the internet 25 on a fixed phone
- A telephone communication line 3D to a fixed phone
- A mobile wireless communication line 3E

Each line 3 is terminated by an appropriate user equipment terminal.

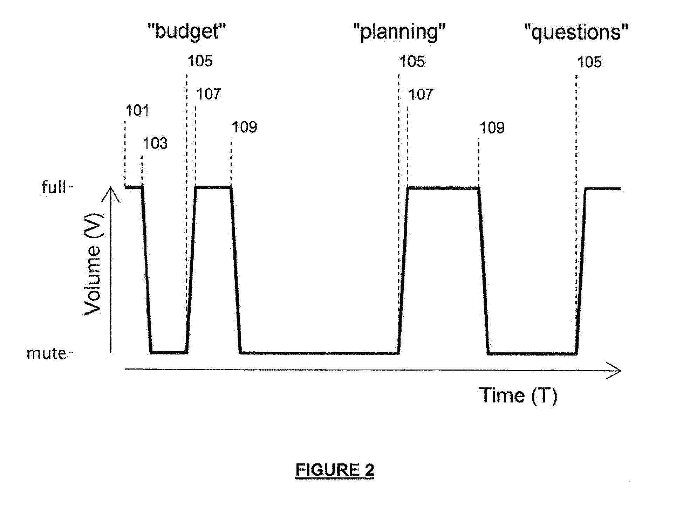

To illustrate the use of the conference system 1, let us take the scenario whereby there are a plurality of users connected to the conference system 1, and each user being connected to the conference system 1 using an independent communication line 3. This is illustrated at figure 2 from the perspective of an end user.

Figure 2 illustrates a timeline T of the volume V of the audio signal heard by the end user engaged in a conference call.

To start, the volume of the conference exchange is considered normal (step 101). The filtering device 15 comprises at least the following keywords having previously been entered: "budget", "planning", and "questions".

At step 103, the user activates the filtering capabilities of the filtering device 15, triggering a reduction in the volume of the conference being transmitted to the user. The volume setting may be determined by the user, but may typically range from 0% (mute) to 20% of the normal conference volume.

At some later point in time, at step 105, a keyword "budget" is recognized by the filtering device 15, which triggers a return of the conference volume to normal (step 107) in a short space of time. In a variant, the conversation context is additionally given by the device in addition to the muting functionalities, by the displaying a text transcript the last N seconds of the conference content. The length of the transcript may be configurable. For this, the embodiment always stores in-memory the last N seconds of the conversation, in audio or text form.

At some point of time, the user may manually reactivate filtering capabilities (step 109), which reduces the volume once again until another keyword is triggered.

In a variant of this use case, the filtering device 15 may mute the conversation (step 109) automatically after a predetermined period where no keywords were detected, eg after 30 seconds of no key word spoken.

The above embodiment describes a case where the volume of the conversation is raised upon detection of a keyword. An alternate embodiment is to lower the conversation volume upon detection of a keyword. This embodiment would allow participants to mute parts of the conversation that is of no interest to them, for example "budget" or "legal" discussions for personnel not part of such teams.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. An audio conference system (1) comprising:
- a bridge device (10) for connecting together as input a plurality of audio sources and for outputting a plurality of identical combined audio streams;
- a storage device (20) adapted for storing keywords,
- a voice recognition device (15) adapted to compare the audio sources connected to said bridge device with said keywords stored on the storage device;
wherein said voice recognition device (15) is adapted to modulate the volume of said audio streams in function of voice recognition detecting a match between a keyword and audio in any one of said audio sources.

2. An audio conference system according to claim 1, wherein said modulation of volume consists of raising the volume on detection of a key word, and of lowering the volume in the absence of a detection of a key word.

3. An audio conference system according to claim 1, wherein said modulation of volume consists of lowering the volume on detection of a key word, and of raising the volume in the absence of a detection of a key word.

4. An audio conference system according to claims 2 or 3, wherein there is a predetermined lag time between the detection of a key word and the modulation of the volume.

5. An audio conference system according to any one of claims 1 to 4, wherein the keywords are stored on the storage device (20) as audio data or as text data.

6. An audio conference system according to claim 5, wherein the storage device (20) is located on an end-user equipment.

7. An audio conference system according to any one of the preceding claims, wherein a voice recognition algorithm is located on an end-user equipment.

8. An audio conference system according to any one of the preceding claims 1 to 5, wherein a voice recognition algorithm is located on the audio bridge device (10).

9. An audio conference system according to any one of the preceding claims, further comprising one or more display devices,
and wherein the audio conference system is further configured to display a transcript of the audio stream over a predetermined past time period.

10. Method of operating an audio conference, comprising the steps of:
- bridging a plurality of calls together by combining a plurality of audio sources and outputting a plurality of identical combined streams;
- comparing said audio sources to a stored keywords and looking for a match;
- modulating the volume of said audio streams in function of said matching audio sources and keywords.
